# EUROPÄISCHE PATENTANMELDUNG

(11) **EP 3 679 775 A1**
(43) Veröffentlichungstag der Anmeldung: **15.07.2020**
(21) Anmeldenummer: 19150787.0
(22) Anmeldetag: 08.01.2019
(51) Int. Cl.: A01B 59/06, A01D 67/00, A01D 46/28, A01M 7/00, A01B 59/00

(54) **DREIPUNKT-KOMBIRAHMEN**

(71) Anmelder: Reichsgraf von Kesselstatt GmbH, 54317 Morscheid (DE)
(72) Erfinder: Die Erfindernennung liegt noch nicht vor
(74) Vertreter: Witthoff Jaekel Steinecke Patentanwälte PartG mbB

(57) **Zusammenfassung**

Die vorliegende Erfindung bezieht sich auf einen Kombirahmen, der den Anschluss und unabhängigen Betrieb von mehreren Anbaugeräten an einem landwirtschaftliches Fahrzeug oder einem Geräteträger zur effizienten Bewirtschaftung von Pflanzen in Reihenkulturen/Reihenerziehung ermöglicht, wie beispielsweise Weinbergen und weiteren Obstkulturen sowie auf Verwendungen dieses Rahmens und landwirtschaftliche Verfahren, die einen solchen Rahmen verwenden.

## Beschreibung

### Technisches Gebiet

Die vorliegende Erfindung bezieht sich auf einen Kombirahmen zum Anbau an ein landwirtschaftliches Fahrzeug oder einen Geräteträger, der den Anschluss und gleichzeitigen Betrieb mehrerer Anbaugeräte zur effizienten Bewirtschaftung von Böden und Kultivierung von Pflanzen in Reihenkulturen/Reihenerziehung, wie beispielsweise beim Weinbau und weiteren Obstkulturen sowie auf entsprechende Verwendungen und landwirtschaftliche Verfahren.

### HINTERGRUND DER ERFINDUNG

Die landwirtschaftliche Bewirtschaftung von Flächen in Steillagen und Steilstlagen stellt besondere Anforderungen and die eingesetzten Zugmaschinen und an die von diesen gezogenen, angetriebenen und gesteuerten Arbeitsgeräte. So werden als Zugmaschinen hierbei häufig Raupensysteme eingesetzt, um die steilen wirtschaftlichen Flächen kontrolliert befahren und bearbeiten zu können. Durch den Kettenantrieb und den daraus resultierenden geringeren Schlupf sind diese Systeme sehr für diese Bewirtschaftungsextreme geeignet. In Steilsthängen kommen Raupensysteme in Kombination mit Windentechnik zum Einsatz. Generell ermöglicht das Raupensystem nur den Anbau eines Arbeits- bzw. Anbaugerätes, welches je nach Verwendung im Schub oder Zug betätigt wird. So gibt es zwar von marktführenden Firmen (z.B. der Clemens GmbH & Co. KG) Systeme zur mechanischen beidseitigen Unterstockbearbeitung, welche allerdings keine Kombination von zwei Arbeitsschritten und auch keine seitenabhängige individuelle Anpassungen des Anbaugerätes an das Gelände zulassen. Dies führt dazu, dass falls der Einsatz mehrerer unterschiedlicher Anbaugeräte zu einem bestimmten Zeitpunkt der landwirtschaftlichen Bearbeitung notwendig ist, mehrere Durchfahrten jeweils mit den unterschiedlichen Anbaugeräten notwendig sind, was beispielsweise durch einen Wechsel des Anbaugerätes und nochmalige Durchfahrt oder durch die Durchfahrt mit mehreren, mit unterschiedlichen Anbaugeräten ausgestatteten Zugmaschinen erreicht werden kann.

Der vorliegenden Erfindung lag daher die Aufgabe zugrunde, eine Vorrichtung bereitzustellen, mittels welcher die Anzahl der Durchfahrten reduziert werden kann wodurch Parameter wie z.B. Arbeitszeit, Materialverschleiß, Lohnkosten, Treibstoffverbrauch und maschinelle Belastung der Böden in ihrer Intensität verbessert bzw. verringert werden können.

Diese Aufgabe wird erfindungsmäßig gelöst mittels der in Anspruch 1 dargestellten Lehre. Weitere vorteilhafte Ausgestaltungen und Weiterbildungen der Erfindung gehen aus den Unteransprüchen hervor. Die Lösung bring die aus der Aufgabenstellung resultierenden Vorteile mit sich.

### ZUSAMMENFASSUNG DER ERFINDUNG

Die Erfindung bezieht sich allgemein auf einen Kombirahmen, der sich quer zur Fahrtrichtung erstreckend dazu ausgestaltet ist, mehrere Anbaugeräte bzw. Werkzeuge zu tragen, die unabhängig voneinander betrieben werden können, wobei der Rahmen mit einer Zugmaschine oder einem Zugschlitten/Geräteträger verbunden ist. Der erfindungsgemäße Rahmen verfügt über Vorrichtungen, über welche die Stellung der Anbaugeräte relativ zu dem Rahmen verändert werden kann. Der Rahmen weist an mehreren, in Querrichtung voneinander beabstandeten Stellen Hubvorrichtungen zum Anheben und Absenken der Werkzeuge auf. Bei einer Ausgestaltung der Hubvorrichtungen als hydraulische Vorrichtungen, sind mit den hydraulischen Hubvorrichtungen gekoppelte Hydraulikzylinder und Steuerventile verbunden, die mit den Hydraulikzylindern und mit einer Hydraulikdruckquelle in Verbindung stehen, um wahlweise die Hydraulikzylinder aus- und einzufahren, so dass die Hubeinrichtungen die Werkzeuge anheben oder absenken. Darüber hinaus ist die Lage der Werkzeuge in Breite relativ zu dem Rahmen variierbar. Die Lage der Bearbeitungseinrichtung kann dabei während des Durchfahrens beispielsweise einer Pflanzreihe vorzugsweise jederzeit an die vorhandenen Gegebenheiten angepasst werden. Beispielsweise kann eine initiale Einstellung der Arbeitsstellung der Anbaugeräte mit anschließender Anpassung deren Position an die örtlichen Gegebenheiten erfolgen. Die Arbeitsstellung der Hubeinrichtungen und der daran gekoppelten Anbaugeräte wird dabei zum einen durch die Geometrie der Reihenkultur, also insbesondere deren Breite, und zum anderen durch die Neigung des Geländes, auf dem sich die Reihenkultur befindet oder entstehen soll, vorgegeben und kann an diese angepasst werden. Mit dem erfindungsgemäßen Kombigerät/Rahmen wird somit eine neuartige Vorrichtung mit individueller beidseitiger Säulenaushebung als Hubeinrichtungen und beidseitiger individueller Breitenverstellung zur mechanischen Bewirtschaftung beispielsweise des Unterstockbereiches in Monokulturen, die vorzugsweise in Reihenkulturen angeordnet sind bereitgestellt. Des Weiteren bezieht sich die vorliegende Erfindung auf die Verwendung der erfindungsgemäßen Kombirahmen in der Landwirtschaft, insbesondere im Pflanzenanbau, vorzugsweise bei Obstbau, besonders bevorzugt beim Weinbau. Ferner bezieht sich die Erfindung auf Verfahren zur landwirtschaftlichen Kultivierung von Pflanzen zur Gewinnung von deren Teilen oder Produkten, wobei der erfindungsgemäße Kombirahmen zur Anlage und/oder Pflege von obstgebenden Pflanzenkulturen eingesetzt wird. Vorzugsweise wird das erfindungsgemäße Verfahren im Obstbau, zur Pflege des zu bewirtschaftenden Bodens in dem obstgebende Pflanzen kultiviert werden, besonders bevorzugt im Weinbau, zur Gewinnung von Trauben eingesetzt.

### KURZE BESCHREIBUNG DER ABBILDUNGEN

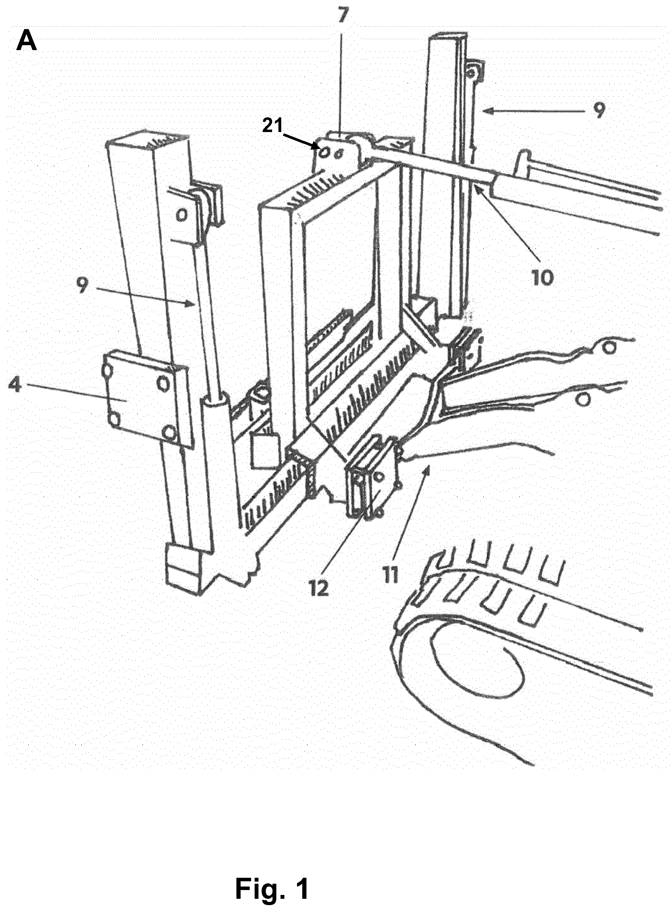

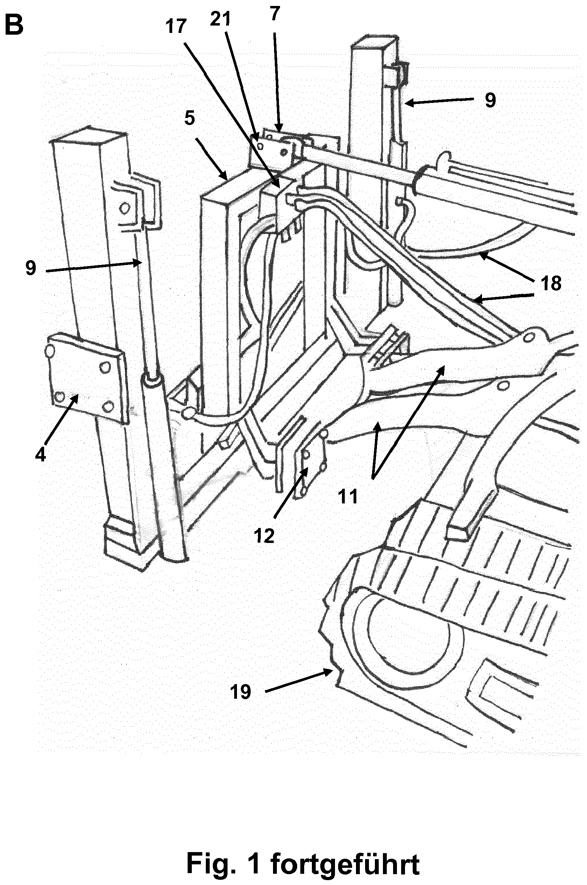

- **Fig. 1:**: **A:** Übersichtsdarstellung des erfindungsgemäßen Kombirahmens befestigt an einem Raupenfahrzeug über eine Dreipunktaufnahme Oberlenker (7) sowie über eine Anbaukonsole (12) an den Dreipunktaufnahmen an den Unterlenkern (11). **B:** Übersichtsdarstellung wie in (**A**) jedoch mit angezeigten Zuleitungen (18) für die elektrischen, hydraulischen und/oder pneumatischen Systeme zu dem Verteiler/Steuergerät (17) angebracht am Trägerrahmen (5).

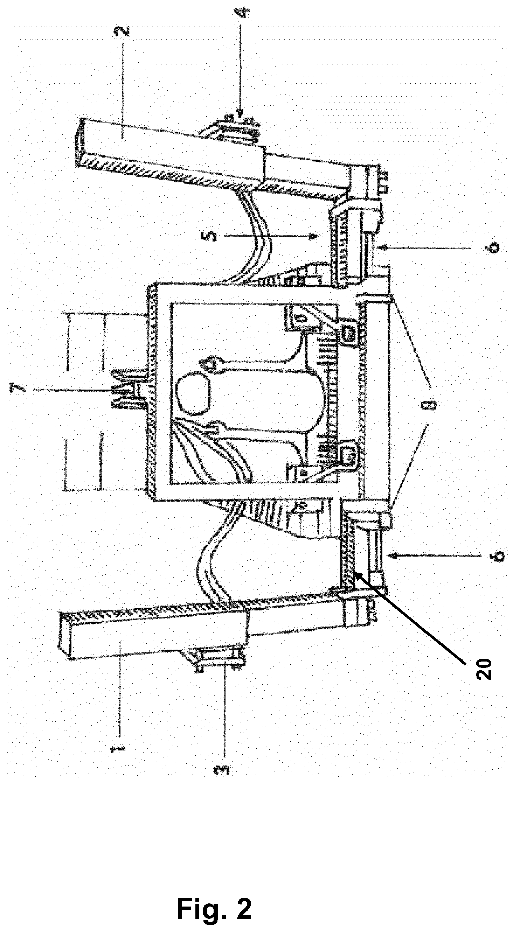

- **Fig. 2:**: Ansicht des Kombirahmens von hinten mit Blickrichtung zur dahinterliegenden Zugmaschine (nicht sichtbar). Linke (1) und rechte Säulenaushebung (2) in einem nach oben gefahrenem Zustand, sowie (teilweise) ausgefahrenen Trägern für die Säulenaushebungen (20).

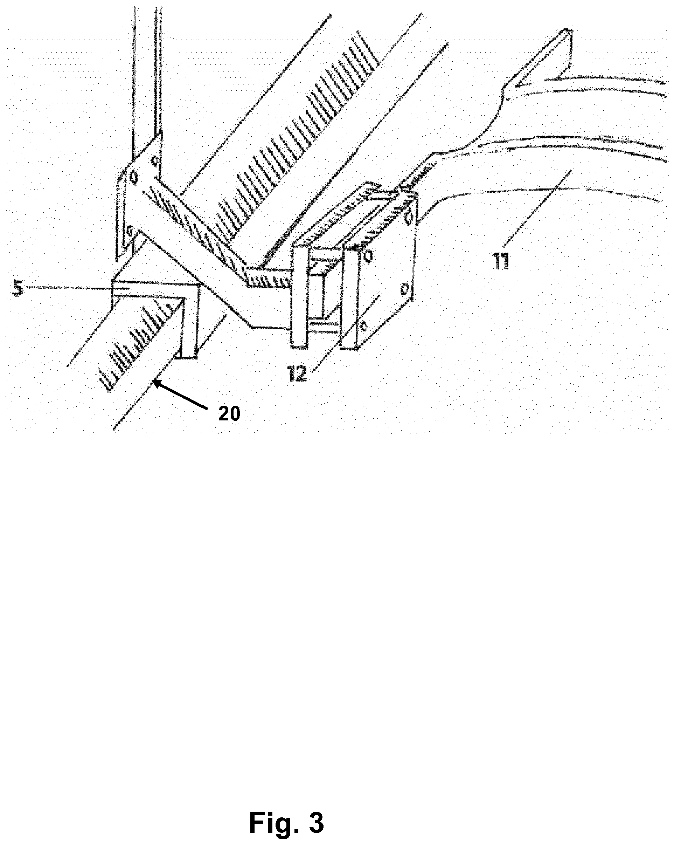

- **Fig. 3:**: Detailansicht der Anbaukonsole (12) an dem Unterlenker (11) zur Darstellung einer möglichen Verbindung zwischen dem Trägerrahmen (5) und dem Träger der Säulenaushebung (20): Bei der dargestellten Lösung enthält der Trägerrahmen (5) im unteren Rohr einen Hohlraum, in welchem der Träger der Säulenaushebung (20) gelagert ist. Durch das Hinein- bzw. Hinausfahren des Trägers der Säulenaushebung (20) aus dem Trägerrahmen (5) kann die jeweilige Säulenaushebung seitlich aus dem Trägerrahmen (5) hinaus- oder in diesen eingefahren werden und das daran befestigte Anbaugerät so im gewünschten Abstand zum Kombirahmen betrieben werden. Hierdurch kann die Bearbeitungsbreite eingestellt werden, beispielsweise bei unterschiedlichen Breiten von Reihenkulturen.

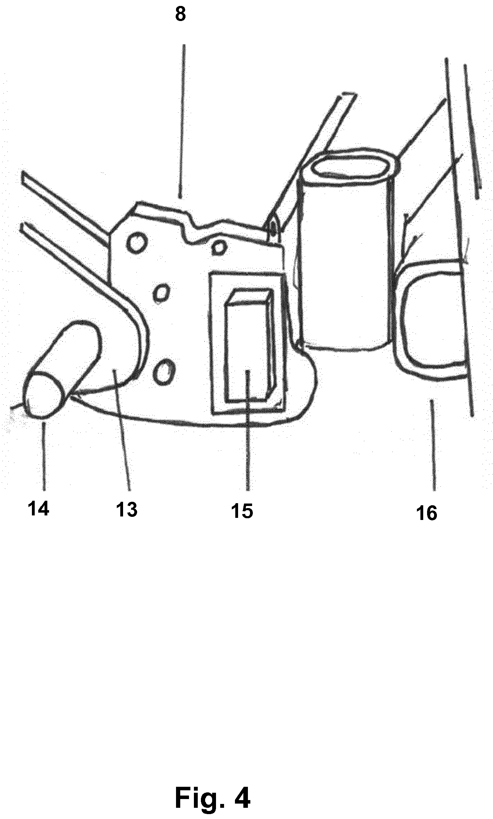

- **Fig.4**:: Detailansicht der Dreipunktaufnahme Unterlenker (8) für ein Anbaugerät, welches mittels einer unteren Aufhängung (13) zwischen den Säulenaushebungen an den erfindungsgemäßen Kombirahmen (16) befestigt werden kann. Die Verbindung wird in dem dargestellten Fall durch einen Bolzen (14) gesichert, der durch die untere Aufhängung (13) und die Dreipunktaufnahme Unterlenker (8) durchgeht.

### AUSFÜHRLICHE DARSTELLUNG DER ERFINDUNG

Die vorliegende Erfindung betrifft einen Kombirahmen zur Verbindung von Anbaugeräten an eine Antriebsmaschine oder einen Geräteträger. Die Verbindung des erfindungsgemäßen Rahmens an die Antriebsmaschine kann grundsätzlich auf unterschiedliche Art und Weise erfolgen. Der erfindungsgemäße Kombirahmen ist vorzugsweise ein Zwischenrahmen und befindet sich demnach zwischen der antreibenden Maschine und einem oder mehreren Anbaugeräten. Um eine unkomplizierte Verbindung des Rahmens an möglichst viele unterschiedliche Antriebsmaschinen oder Geräteträger zu ermöglichen wird vorzugsweise der Kombirahmen in eine Dreipunkt-Aufhängung der Antriebsmaschine bzw. des Geräteträgers eingehängt. Der erfindungsgemäße Rahmen ist ferner derart ausgestaltet, dass der Anschluss von mehr als einem Anbaugerät ermöglicht ist, um die Anzahl der zur Bewirtschaftung notwendiger Durchfahrten durch eine Pflanzenkultur, bzw. durch eine Fläche, auf der eine Pflanzenkultur, vorzugsweise eine Reihenkultur entstehen soll, möglichst gering zu halten. Vorzugsweise ist der Rahmen so ausgestaltet, dass er bzw. die daran gekoppelten Anbaugeräte zur Bearbeitung des Unterstock- und/oder des Zwischenstockbereichs eingesetzt werden können, so der Kombirahmen im Weinbau eingesetzt wird. Vorzugsweise ist die Verbindung daher dadurch gekennzeichnet, dass gleichzeitig mindestens zwei Anbaugeräte an den Kombirahmen befestigt und betrieben werden können. Weiter bevorzugt können mehr als zwei Anbaugeräte an den Kombirahmen befestigt und daran betrieben werden, beispielsweise mindestens drei Anbaugeräte. In einer Ausführungsform werden mehr als drei Anbaugeräte an den Kombirahmen angeschlossen, und können dort betrieben werden, beispielsweise vier, fünf, sechs, sieben, acht, neun oder zehn Anbaugeräte.

Vorzugsweise wird zur Verbindung an eine Zugmaschine der Oberlenker (10) der Zugmaschine in der oberen Dreipunktaufnahme (7) verankert und die Anbaukonsole (12) in den Unterlenkern der Zugmaschine (11). Eine vorzugsweise vorhandene weitere Dreipunktaufnahme an dem Kombirahmen ermöglicht die Befestigung eines weiteren Anbaugerätes an der Oberlenkeraufnahme (7) und den beiden Dreipunktaufnahmen für die Unterlenker (8). Diese vorzugsweise vorhandene weitere Dreipunktaufnahme wird später genauer beschrieben.

Bei der Bewirtschaftung einer landwirtschaftlichen Fläche ist es häufig notwendig Bodenunebenheiten bzw. Unterschiede im Bodenniveau zu beachten und auszugleichen, damit die Anbaugeräte in der gewünschten Höhe bzw. Tiefe betrieben werden können, also beispielsweise in unterschiedlicher Tiefe im Boden oder in bestimmter Höhe über dem Boden. Um diese Möglichkeit zu bieten kann die Verbindung zwischen dem Kombirahmen (16) und den Anbaugeräten grundsätzlich unterschiedlich ausgeführt werden. Vorzugsweise ist der erfindungsgemäße Kombirahmen (16) dadurch gekennzeichnet, dass der Kombirahmen (16) über einen Trägerrahmen (5) verfügt, mit welchem Säulenaushebungen verbunden sind, wobei an den Säulenaushebungen die Anbaugeräte befestigt sowie betrieben werden können. Die Anzahl der Säulenaushebungen (1, 2) kann grundsätzlich danach bestimmt werden, wie viele Anbaugeräte an den Kombirahmen angebaut werden sollen. Vorzugsweise ist der erfindungsgemäße Kombirahmen dadurch gekennzeichnet, dass mindestens zwei höhenverstellbare Säulenaushebungen (1, 2) verbunden sind. In einer Ausführungsform sind mehr als zwei Säulenaushebungen an dem erfindungsgemäßen Kombirahmen angebracht, z.B. drei, vier, fünf, sechs, sieben, acht, neun oder zehn Säulenaushebungen. Vorzugsweise sind an den Säulenaushebungen Anbauvorrichtungen (3, 4) vorgesehen, welche der Fixierung der Anbaugeräte dienen, wie von Unterstockgeräten, z.B. der Rollhacke oder der Unterstockscheibe. Vorzugsweise ist eine Anbauvorrichtung (3, 4) auf einer Säulenaushebung (1, 2) angebracht. In einer Ausführungsform sind mehr als eine Anbauvorrichtung an einer Säulenaushebung angebracht, z.B. zwei, drei, vier oder fünf Anbauvorrichtungen (3, 4) auf einer Säulenaushebung (1, 2).

Die Säulenaushebungen (1, 2) können an dem Rahmen (16) grundsätzlich hintereinander in Fahrtrichtung oder quer zur Fahrtrichtung angeordnet werden. Um vorzugsweise die seitlich der Fahrtstrecke der Zugmaschine oder des Geräteträgers gelegenen Pflanzenreihen, bzw. Bodenabschnitte, auf denen solche Pflanzenreihen wachsen sollen gleichzeitig bearbeiten zu können wird der erfindungsgemäße Kombirahmen (16) vorzugsweise derart ausgestaltet, dass die Säulenaushebungen (1, 2) bei Verbindung des Kombirahmens (16) mit der Dreipunktaufnahme einer Antriebsmaschine oder eines Geräteträgers quer zur Fahrtrichtung nebeneinander angeordnet sind.

Um nun, wie schon oben angemerkt, die Anbaugeräte in der gewünschten Höhe bzw. Tiefe betrieben zu können ist der erfindungsgemäße Kombirahmen (16) vorzugsweise derart ausgeführt, dass die Säulenaushebungen (1, 2) höhenverstellbar sind. Die Säulenaushebungen können gekoppelt oder unabhängig voneinander in ihrer Höhe (bezogen auf den Kombirahmen und somit auch auf den Boden) verändert werden. Vorzugsweise ist der Kombirahmen (16) so ausgeführt, dass zumindest die Möglichkeit dazu besteht, die Säulenaushebungen (1, 2) unabhängig voneinander in der Höhe zu verstellen, wodurch auch die Höhe der an den Säulenaushebungen (1, 2) angebrachten Anbaugeräte verändert werden kann und diese in eine Arbeitsstellung, beispielsweise im, auf oder oberhalb des Bodens, oder auch in eine Transportstellung, wo die Anbaugeräte in einer Position oberhalb des Bodens sind, verbracht werden können. Alternativ oder zusätzlich ist der erfindungsgemäße Kombirahmen derart ausgeführt, dass die an den Säulenaushebungen (1, 2) befestigten Anbaugeräte gesondert/unabhängig voneinander betrieben werden können.

Generell kann die Höhenverstellung der Säulenaushebungen (1, 2) auf unterschiedliche Weise erreicht werden. Vorzugsweise ist der erfindungsgemäße Kombirahmen derart ausgestaltet, dass die Säulenaushebungen (1, 2) über Hubzylinder höhenverstellbar sind, weiter bevorzugt über doppelwirkende Hubzylinder, besonders bevorzugt über hydraulische doppelwirkende Hubzylinder (9). Unter Berücksichtigung der Falllinie und des Seitenhanges kann durch die Höhenverstellung der Säulenaushebungen (1, 2) z. B. die mechanische Unterstockbearbeitung beidseitig in optimalen Bodentiefen und im Rahmen der erforderlichen Geschwindigkeiten erfolgen. Je nach Anforderung können Anbaugeräte (z.B. Unterstockwerkzeuge) einseitig oder auch beidseitig eingesetzt werden.

Werden an den mindestens zwei Säulenaushebungen (1, 2) Anbaugeräte befestigt, so ist es vorteilhaft, wenn diese im Abstand voneinander, beispielsweise in der Querrichtung zur Fahrtrichtung verändert werden können. Dies ist beispielsweise notwendig, um die Position der Anbaugeräte an die Höhe und Breite von Pflanzen in einer Reihenkultur, den Abstand der einzelnen Reihen und die Neigung des Geländes anzupassen, in dem der Kombirahmen (16) samt angeschlossenen Anbaugeräten betrieben werden soll. Daher ist vorteilhafterweise der erfindungsgemäße Kombirahmen wie hierin beschrieben derart ausgestaltet, dass der Abstand zwischen den Säulenaushebungen verändert werden kann. Dies kann grundsätzlich auf unterschiedliche Art erfolgen. Vorteilhafterweise wird dies dadurch erreicht, dass die Säulenaushebungen unabhängig voneinander von der zum Boden während der Verwendung des Kombirahmens im Wesentlichen senkrechten Mittelachse des Rahmens entfernt oder auf diese zubewegt werden können. Wird als Bezugspunkt der Trägerrahmen (5) genommen, so können in dem erfindungsgemäßen Kombirahmen die Säulenaushebungen (1, 2) seitlich vom Trägerrahmen (5) weg oder auf diesen zubewegt werden, wobei die Säulenaushebungen dann in der gewünschten Entfernung zum Trägerrahmen fixiert werden und diese Position bei der Bewirtschaftung der landwirtschaftlichen Fläche beibehalten können.

In anderen Worten, sind die Säulenaushebungen in Querrichtung am Rahmen angebracht, so kann bei dem erfindungsgemäßen Kombirahmen der Abstand zwischen den Säulenaushebungen in der Querrichtung verändert werden. Dies kann bevorzugt für jede Säule einzeln erfolgen, d.h. es können beide oder auch nur eine der Säulenaushebungen bewegt werden.

Die Position der Säulenaushebungen (1, 2) und somit der damit verbundenen Anbaugeräte kann also durch die erfindungsgemäße Gestaltung des Kombirahmens (16) flexibel während des Durchfahrens des zu bearbeitenden Geländes an die Geländegegebenheiten verändert werden. So können die Säulenaushebungen (1, 2) sowohl in ihrer Höhe (z. B. bezogen auf den Boden) wie auch in ihrer Entfernung zueinander während des Arbeitsprozesses variiert werden, um so beispielsweise die Lage der Anbaugeräte an die Geländegegebenheiten und/oder an die Lage der Pflanzen im bearbeitetem Bereich anzupassen. Dies wird zum Beispiel dadurch erreicht, dass sowohl die Säulenaushebungen als auch die Anbaugeräte gesondert, d.h. individuell gesteuert werden können und somit deren Stellung/Lage und Arbeitszustand (z. B: einzelne oder alle Arbeitsfunktionen eingeschaltet/ausgeschaltet, Ausmaß in welchem die Funktion ausgeführt wird, wie beispielsweise unterschiedliche Arbeitsgeschwindigkeiten, Drehzahlen etc.) unterschiedliche aber auch gleiche Zustände einnehmen können.

Um eine entsprechende seitliche Bewegungsfähigkeit der Säulenaushebungen (1, 2) gewährleisten zu können, kann die Verbindung der Säulenaushebungen mit dem Kombirahmen (16) grundsätzlich unterschiedlich ausgestaltet werden. Vorzugsweise ist der erfindungsgemäße Kombirahmen (16) jedoch so ausgestaltet, dass die Säulenaushebungen (1,2) derart mit einem Trägerrahmen (5) verbunden sind, dass sie aus dem Trägerrahmen (5) aus- und eingefahren werden können.

Generell kann die Breitenverstellung der Säulenaushebungen (1, 2) auf unterschiedliche Weise erreicht werden. Zur Veränderung des seitlichen Abstandes zwischen den Säulenaushebungen ist der erfindungsgemäße Kombirahmen derart ausgestaltet, dass die Säulenaushebungen (1, 2) über Hubzylinder seitlich verstellbar sind, weiter bevorzugt über doppelwirkende Hubzylinder, besonders bevorzugt über hydraulische doppelwirkende Hubzylinder (6). Unter Berücksichtigung der Breite der zu bearbeitenden Bodenfläche, bzw. des Abstandes zwischen den Pflanzenreihen kann durch die Breitenverstellung der Säulenaushebungen (1, 2) z. B. die mechanische Unterstockbearbeitung beidseitig in optimaler Entfernung von dem Kombirahmen und in der erforderlichen Geschwindigkeit erfolgen. Je nach Anforderung können Anbaugeräte wie Unterstockwerkzeuge einseitig oder auch beidseitig eingesetzt werden. Vorzugsweise wird sowohl für die Höhen- wie für die seitliche Verstellung der Säulenaushebungen das gleiche Antriebs- und Ansteuerungssystem ausgewählt, besonders bevorzugt wird dies über hydraulische Systeme, d.h. hydraulische Hubzylinder, Hydraulikzylinder bzw. Hydraulikmotoren bewerkstelligt, wobei diese vorzugsweise doppelwirkend sind.

Durch einen bevorzugten Einsatz von zwei doppelwirkenden Hubzylindern (6) (für jedes Seitenelement mindestens ein doppelwirkenden Hubzylinder) sind die Seitenelemente individuell unabhängig voneinander breitenverstellbar. Dabei werden die Seitenelemente (1,2) aus dem Trägerrahmen (5) aus bzw. eingefahren, mit dem Vorteil der optimalen Maschinenbreite für variierende Gassenbreiten und landschaftliche Bedingungen. Diese Gestaltung des Kombirahmens (16) ist bedeutend für die erfolgreiche optimierte mechanische Unterstockbearbeitung beim Einsatz des Kombirahmens im Weinbau.

Unter dem Begriff eines Trägerrahmens (5) wird hierbei ein Teil des Kombirahmens (16) verstanden. Dieser Teil ist vorzugsweise dadurch gekennzeichnet, dass er einen starren, inneren Kern des Kombirahmens (16) bildet, mit dem vorzugsweise die beweglichen Teile des Rahmens, wie die Säulenaushebungen (1, 2) verbunden sind. Eine vorteilhafte Ausführung des Kombirahmens (16) und des Trägerrahmens (5) wird beispielsweise in den Abbildungen 1-2 gezeigt. Der Trägerrahmen (5) bildet hier das Zentrum des gesamten Kombirahmens, mit welchem die Träger der Säulenaushebungen verbunden sind. Die Säulenaushebungen können auf den Trägerrahmen zu oder von diesem wegbewegt werden indem ihre Träger (20) in den Trägerrahmen hinein- bzw. hinausgleiten.

Durch die Säulenaushebungen (1, 2) können mindestens zwei Anbaugeräte an dem erfindungsgemäßen Kombirahmen betrieben werden. Vorzugsweise ist der erfindungsgemäße Kombirahmen ferner so ausgestaltet, dass zusätzlich mindestens ein weiteres Anbaugerät an den Kombirahmen befestigt und betrieben werden kann, wobei dies unabhängig von den Säulenaushebungen erfolgt. Besonders bevorzugt wird hierbei der erfindungsgemäße Kombirahmen derart ausgestaltet, dass ein Anbaugerät an den Kombirahmen zwischen den Säulenaushebungen befestigt und betrieben werden kann.

Dazu wird der Oberlenker (10) in der oberen Dreipunktaufnahme (7) des Kombirahmens verankert und die Anbaukonsole (12) in den Unterlenkern der Zugmaschine (11). Die weitere Dreipunktaufnahme an dem Kombirahmen ermöglicht die Befestigung eines weiteren Anbaugerätes an der Oberlenkeraufnahme (7) (siehe vordere unbesetzte Öffnung (21) in den Figuren 1A und 1B, mit der hinteren Öffnung ist bereits der Oberlenker (10) vom Zugfahrzeug verbunden) und an weiteren Dreipunktaufnahmen im unteren Bereich des Kombirahmens an dort befindlichen Dreipunktaufnahmen Unterlenker (8). Eine bespielhafte Darstellung einer derartigen Verbindung eines weiteren Anbaugerätes an den Dreipunktaufnahmen am Unterlenker wird in der Detailzeichnung in Fig. 4 gezeigt. So kann beispielsweise eine zusätzliche Dreipunktaufnahme Unterlenker an einer Schiene angebracht sein (z.B. an einem Seitenblech der Schiene), die sich unten am Rahmen befindet. Zusätzlich bedeutet wie bei der Dreipunktaufnahme Oberlenker, dass dort links und rechts am Trägerrahmen je eine Dreipunktaufnahme zusätzlich zu den vorhandenen ist, die zur Verbindung an die Unterlenker an der Zugmaschine verwendet werden.

Mögliche Anbaugeräte/Werkzeuge, die an den erfindungsgemäßen Kombirahmen angeschlossen werden und unabhängig voneinander betrieben werden können, werden ausgewählt aus der Gruppe umfassend oder bestehend aus Mulchern, Rollhacken, Fingerhacken, Rotorbürsten, Scharen (z.B. Flachschar und Abraumschar) und Scheiben.

Anbaugeräte, die an Zugmaschinen oder Geräteträger befestigt werden sind häufig, um ihr Gewicht zu tragen, mit Rädern oder Ketten ausgestattet, mit denen sie sich im Zugbetrieb am Boden abstützen. Der erfindungsgemäße Kombirahmen benötigt vorzugsweise keiner weiteren Abstützung, weder durch direkt daran angebrachte Räder oder Ketten, noch mittelbar über entsprechende Einrichtungen an den Anbaugeräten. Vorzugsweise ist daher der erfindungsgemäße Kombirahmen räder- und kettenlos. Zur Klarstellung wird betont, dass sich diese Eigenschaft auf den erfindungsgemäßen Kombirahmen selbst bezieht. Die damit verbundenen Anbaugeräte können sowohl Ketten oder Räder aufweisen, oder auch ebenfalls räder- und kettenlos sein.

Der erfindungsgemäße Kombirahmen (16) ermöglicht es, zahlreiche landwirtschaftliche Arbeitsprozesse viel effizienter durchzuführen, indem beispielsweise mehrere und bei Bedarf auch unterschiedliche Anbaugeräte an den Rahmen angebaut und bei einer Durchfahrt durch eine zu bewirtschaftende Fläche gleichzeitig betrieben werden. Dies führt zu ebenfalls zu einer Minimierung von Rüstzeiten. Besonders vorteilhaft ist die Verwendung des erfindungsgemäßen Kombirahmens somit auch im schwierigen Gelände, welches schwer durchfahrbar ist, da weniger Durchläufe notwendig sind, was Treibstoff und Zeit spart, den Maschinenverschleiß senkt, den Boden weniger belastet, was zu einer Reduzierung von Bodenverdichtungen führt und auch die Gefahr eines Unfalls, oder Abrutschens auf dem schwierigen Untergrund verringert. Ebenso kann dank der vereinfachten mechanischen Feldbearbeitung teilweise oder auch gänzlich auf Herbizide verzichtet werden, was dem Umweltschutz und einer geringeren Belastung der so gewonnenen pflanzlicher Produkte zuträglich ist. Zu den erwähnten schwierigen Geländen gehören insbesondere Steil- und Steilstlagen, die zum Teil auch den Einsatz von Kettenantrieben verlangen, um ein Abrutschen von Zugmaschinen zu verhindern und/oder das Befahren der Steil-/Steilstlage überhaupt zu ermöglichen. Durch die oben beschriebenen Eigenschaften kann somit der erfindungsgemäße Rahmen in der Landwirtschaft und vorzugsweise in der Bewirtschaftung von Steil- und Steilstlagen verwendet werden.

Gleichzeitig ermöglicht der Betrieb von mehreren und/oder unterschiedlichen Anbaugeräten an dem erfindungsgemäßen Kombirahmen insbesondere bei Bearbeitung von Reihenpflanzenkulturen die Bearbeitung von zwei Reihen gleichzeitig, beispielsweise von den Reihen links und rechts neben der Richtung, in welcher der Kombirahmen durchzogen bzw. fortbewegt wird. Vorzugsweise wird also der erfindungsgemäße Kombirahmen beim Obstbau bzw. zur Bewirtschaftung von Obstkulturen verwendet.

Vorzugsweise ist im ziehenden Fahrzeug, bzw. Antriebsmaschine ein oder mehrere Steuereinheiten angeordnet, die mit Sensoren, wie Rückkopplungs-Potentiometern oder ähnlichen Meßwandlern verbunden ist/sind zur Erfassung und Steuerung der Zylinderhublänge, der Stellung der Säulenaushebungen und vorzugsweise auch der Arbeitsgeräte am erfindungsgemäßen Kombirahmen. In einer Ausführungsform sind zusätzlich oder alternativ auf dem erfindungsgemäßen Kombirahmen Vorrichtungen zur Steuerung und vorzugsweise auch Erfassung der Stellung der Säulenaushebungen und/oder der Arbeitsgeräte angebracht. Vorzugsweise werden solche Vorrichtungen ausgewählt aus der Gruppe umfassend Verteiler, Verteilerblöcke, Steuerblöcke, Hydrauliksteuerblöcke. Vorzugsweise stehen diese Vorrichtungen auf dem Kombirahmen in Verbindung mit Antriebs- und Steuereinrichtungen auf der Antriebsmaschine. In einer bevorzugten Ausführungsform wird der erfindungsgemäße Kombirahmen bereitgestellt, wie hierin beschrieben, umfassend einen Steuerblock, vorzugsweise einen Hydrauliksteuerblock.

Ebenso wird vorzugsweise der Rahmen und entweder indirekt oder direkt die Säulenaushebungen, an diesen angebrachte Hubzylinder über Leitungen zu deren Steuerung und Betrieb mit dem Zuggerät verbunden. Beispiele solcher Leitungen sind elektrische, hydraulische und pneumatische Leitungen.

Des Weiteren betrifft die vorliegende Erfindung auch die Verwendung eines erfindungsgemäßen Kombirahmens im Pflanzenbau. Vorzugsweise werden erfindungsgemäße Kombirahmen bei der Bewirtschaftung von Obstkulturen in Reihenerziehung verwendet. Weiter bevorzugt wird durch die vorliegende Erfindung eine Verwendung des erfindungsgemäßen Kombirahmens zur Bewirtschaftung von Obstkulturen in Reihenerziehung, vorzugsweise von Weinbergen, vorzugsweise von Obstkulturen in Reihenerziehung in Steillagen und Steilstlagen bereitgestellt.

Die erfindungsgemäße Verwendung des hier offenbarten Kombirahmens umfasst dabei wie hierin beschrieben dessen Betrieb in Direktzug und Nicht-Direktzugfähigen Anlagen, da der Kombirahmen ein kombiniertes Arbeiten mit dem Traktor und Raupensystemen sowie mittels Geräteträger ermöglicht. Geräteträger werden vorzugsweise in mit Seilzug betrieben Anlagen eingesetzt, wobei der Seilzug auch unterstützend in einer Direktzuganlage eingesetzt werden kann, um beispielsweise bei besonders schwierigem Gelände (z. B. in der Steilstlage) durch ein am Traktor oder vorzugsweise an einer Raupe befestigtes Seil, welches mit einer Winde verbunden ist, den Betrieb des eingesetzten Fahrzeugs zu unterstützen.

Ferner wird durch die vorliegende Erfindung auch die Verwendung eines Trägersystems zum Betrieb eines erfindungsgemäßen Kombirahmens wie hierin beschrieben in der Landwirtschaft bereitgestellt. Vorzugsweise ist das Trägersystem bei dieser Verwendung raupengestützt, d.h. der Kombirahmen wird auf eine raupengetriebene Zugmaschine oder einen mit Raupenantrieb ausgestatteten Geräteträger montiert und darauf zur Bewirtschaftung landwirtschaftlicher Flächen, vorzugsweise Steil- und Steilstlagen betrieben.

Des Weiteren stellt die vorliegende Erfindung ein Verfahren zur Gewinnung von Obst aus Obstpflanzen einer Pflanzenkultur, vorzugsweise einer Reihenkultur zur Verfügung, wobei mindestens zwei Anbaugeräte an den erfindungsgemäßen Kombirahmen (16) angebracht werden und anschließend der Kombirahmen mit den mindestens zwei, vorzugsweise mit drei Anbaugeräten über die zu bewirtschaftende Fläche durchzogen wird. Dieser Vorgang findet mindestens einmal, kann aber auch mehrmals zu verschiedenen Zeitpunkten während der Kultivierung der Pflanzenkultur erfolgen, wobei bei jedem Zeitpunkt, zu welchem der Kombirahmen durch die Kultur durchgezogen wird unterschiedliche Anbaugeräten an den Rahmen angebracht und bei Durchziehen betrieben werden können. Das Durchziehen findet vorzugsweise zwischen den Reihen einer Pflanzenkultur, vorzugsweise einer Monokultur statt, wobei die mindestens zwei Anbaugeräte bevorzugt den Unterstockbereich seitlich des Rahmens bearbeiten. Bei dem Verfahren kann zusätzlich oder alternativ eines der zumindest zwei, vorzugsweise drei Anbaugeräte zwischen den Säulenaushebungen des Kombirahmens angebunden und betrieben werden. Das heißt das Verfahren kann mit einem Anbaugerät verbunden mit einer der Säulenaushebungen, und einem Anbaugerät verbunden zwischen diesen; mit zwei Anbaugeräten, jeweils verbunden mit einer der Säulenaushebungen; oder mit drei Anbaugeräten an dem Kombirahmen, wobei zwei mit den Säulenaushebungen und eines dazwischen mit dem Kombirahmen verbunden ist durchgeführt werden. Dabei kann während des Durchziehens durch die Pflanzenkultur der Bereich zwischen den Pflanzenreihen bearbeitet werden, bei der Anwendung des Verfahrens im Weinbau also der Zwischenstockbereich. Werden mindestens drei Geräte an den Kombirahmen angeschlossen, vorzugsweise je ein Anbaugerät an die linke und rechte Säulenaushebung sowie ein drittes an die Dreipunktaufnahme an dem Rahmen, so können durch das Verfahren gleichzeitig die Bereiche an den Pflanzenreihen seitlich (also links und rechts) des Rahmens wie auch zwischen den Pflanzenreihen während eines Durchgangs bearbeitet werden. Wird das Verfahren bei der Kultivierung von Weinreben eingesetzt, so werden bei der Durchführung des Verfahrens, bei dem Schritt, in welchem der Kombirahmen samt Anbaugeräten durch die Pflanzenreihen durchgezogen wird, die Anbaugeräte vorzugsweise eingesetzt zur Bearbeitung von:
(a) dem Unterstockbereich der Reihenkultur - insbesondere wenn Anbaugeräte nur an den Säulenaushebungen angebracht und betrieben werden; oder
(b) dem Unterstock- und dem Zwischenstockbereich der Reihenkultur - insbesondere wenn Anbaugeräte an den Säulenaushebungen und mindestens ein weiteres Anbaugerät zwischen diesen angebracht und betrieben werden.

In dem erfindungsgemäßen Verfahren werden vorzugsweisen Anbaugeräte zur mechanischen Bearbeitung des Bodens und/oder der Pflanzen eingesetzt. Zusätzlich oder alternativ können aber auch chemische oder biologische Arbeitsschritte durchgeführt werden, also beispielsweise das Ausbringen von Dünger oder Aussäen von Pflanzensamen. Vorzugsweise wird in dem Verfahren beim Durchziehen zwischen den Reihen einer Pflanzenkultur der Unterstockbereich der Reihenkultur bearbeitet. Am Ende des Verfahrens wird das bei der Kultivierung gewachsene Obst geerntet. Durch den Einsatz des erfindungsgemäßen Verfahrens können so die Herstellungskosten für das jeweilige Obst gesenkt werden und die bebauten Flächen nachhaltiger bewirtschaftet werden, da sie durch den Einsatz des hier beschriebenen Kombirahmens weniger belastet werden.

In einer bevorzugten Ausführungsform wird das erfindungsgemäße Verfahren beim Anbau von Weinreben eingesetzt: Hierdurch treten die oben beschriebenen Effizienzvorteile bei der Weinkultivierung ein, was zu einer effizienteren und kostengünstigeren Gewinnung von Trauben führt.

### Begriffe und Ausführungsformen

Dreipunkt-Kuppelvorrichtungen sind eine bekannte und vielfach eingesetzte Vorrichtung zur Verbindung von landwirtschaftlichen Anbaugeräten mit anderen landwirtschaftlichen Geräten, wie beispielsweise mit Zugmaschinen. Allgemein sind Dreipunkt-Kuppelvorrichtungen gekennzeichnet mit zwei an einer Zugmaschine oder Geräteträger in horizontalem Abstand voneinander angeordneten Unterlenkern mit je einem Fangmaul und einem höher und mittig liegenden Oberlenker mit Fangmaul für ein landwirtschaftliches Anbaugerät, das untere Anschlusspunkte für die Unterlenker und einen oberen Anschlusspunkt für den Oberlenker aufweist. Mittels ver- und entriegelbarer Schnellkuppler in den Unterlenkern und dem längenverstellbaren Oberlenker mit Ver- und Entriegelung lassen sich die Anbaugeräte einfach und standardisiert an- und abbauen. Üblicherweise dient die Dreipunkt-Kuppelvorrichtung als ein Hub- und Tiefensteuerungssystem für ein an eine Zugmaschine anhängbares landwirtschaftliches Arbeitsgerät. Die Dreipunkt-Kuppelvorrichtung bzw. der sogenannte Dreipunkt ist näher in der entsprechenden Norm ISO 730 gekennzeichnet.

Die vorliegende Erfindung kann vorzugsweise an Antriebsmaschinen angeschlossen werden aus der Gruppe umfassend oder bestehend aus: Raupe (Direktzug und Nicht Direktzug), Traktor und Geräteträger/Zugschlitten.

Begriffe Antriebsmaschine, Zugmaschine, Raupensystem, Raupenfahrzeug, Trägerfahrzeug, Raupe, Traktor werden, soweit nicht explizit anders erklärt, hierin füreinander austauschbar verwendet und beziehen sich auf Vorrichtungen, die zur eigenständigen Fortbewegung über den Boden fähig und zusätzlich weitere landwirtschaftliche Vorrichtungen, wie Anbaugeräte und den erfindungsgemäßen Rahmen mitbewegen können, indem sie diesen zum Beispiel hinterherziehen oder mit diesem verbunden sind, so dass sie diese mitbewegen können, wobei die Anbaugeräte für landwirtschaftliche Aufgaben eingesetzt oder einfach transportiert werden können. Typische Vertreter von Zugmaschinen sind der Schlepper (z.B. ein Traktor, in der Regel als Allradschlepper gebaut) und das Raupenfahrzeug (Kettenschlepper). In der Regel werden die Zugmaschinen auch für den Antrieb und/oder Steuerung der an sie angeschlossenen Anbaugeräte verwendet, indem sie diesen den Anschluss und Nutzung der elektrischen, hydraulischen, pneumatischen und/oder mechanischen (z.B. Zapfwelle und/oder Gelenkwelle) Systeme der Zugmaschine ermöglichen. In einer bevorzugten Ausführungsform ist auch der erfindungsgemäße Kombirahmen zum Antrieb und/oder Steuerung der mit diesem verbundenen Anbaugeräte und Säulenaushebungen direkt oder indirekt mit der Zugmaschine verbunden. Vorzugsweise wird ein solcher Anschluß indirekt über auf dem Kombirahmen befindliche Vorrichtungen wie Steuergeräte erreicht, die mit einem oder mehreren der elektrischen, hydraulischen, pneumatischen und/oder mechanischen Systeme der Zugmaschine verbunden sind und die so bereitgestellte Antriebsenergie und/oder Steuersignale an die Anbaugeräte und Säulenaushebungen zu deren Betrieb und/oder Steuerung weiterleiten. Die Weiterleitung der Steuersignale und entsprechender Rückmeldungen erfolgt vorzugsweise bidirektional zwischen der Zugmaschine und dem Kombirahmen sowie den daran angeschlossenen Anbaugeräten und Säulenaushebungen.

Die Begriffe Rahmen, Kombirahmen und Zwischenrahmen werden, soweit nicht explizit anders erklärt, hierin austauschbar füreinander verwendet und beziehen sich auf einen Rahmen, wie er im Anspruch 1 gekennzeichnet wird. Bevorzugte Abwandlungen des erfinderischen Rahmens sind in den von Anspruch 1 abhängigen Ansprüchen gekennzeichnet.

Die Begriffe Anbaugerät, Werkzeug, landwirtschaftliches Werkzeug werden, soweit nicht explizit anders erklärt, hierin austauschbar füreinander verwendet und beziehen sich auf Vorrichtungen, die zur Bearbeitung des Bodens oder von Pflanzen in der Landwirtschaft eingesetzt werden, indem sie mit einer Zugmaschine oder dem Geräteträger verbunden und über die, bzw. neben dem zu bearbeitenden Bodenabschnitt / den zu bearbeitenden Pflanzen gezogen werden. In der Regel werden die Anbaugeräte über den Nebenantrieb, Hydraulikanlagen und/oder den von der Zugmaschine/Geräteträger bereitgestelltem elektrischen Strom angetrieben. Neben Geräten, die mechanische Arbeiten ausführen, also den Boden und/oder die Pflanzen mechanisch bearbeiten können auch zusätzlich oder alternativ auch Anbaugeräte an den Kombirahmen angebracht werden, welche chemische oder biologische Arbeitsschritte durchführen, also beispielsweise Dünger ausbringen oder Pflanzensamen aussäen.

### Bezugszeichen:

- 1: Säulenaushebung (links)
- 2: Säulenaushebung (rechts)
- 3: Anbauvorrichtung Zwischenachsgerät (rechts)
- 4: Anbauvorrichtung Zwischenachsgerät (links)
- 5: Trägerrahmen
- 6: Zylinder zur Breitenverstellung (doppelwirkend) - zur seitlichen Auslenkung der Säulenaushebung
- 7: Dreipunktaufnahme Oberlenker (Kat 1)
- 8: Dreipunktaufnahme Unterlenker (Kat 1)
- 9: Zylinder zur Säulenaushebung (doppelwirkend) - zur Höhenverstellung der Säulenaushebung
- 10: Oberlenker Raupenfahrzeug
- 11: Unterlenker Raupenfahrzeug
- 12: Anbaukonsole
- 13: untere Aufhängung eines zwischen den Säulenaushebungen befestigten Anbaugeräts, z.B. eines Mulchers
- 14: Bolzen
- 15: Schiene Dreipunktaufnahme Unterlenker
- 16: Kombirahmen
- 17: Verteiler für Bus-/Elektrik-/Hydraulikanschlüsse von Zugmaschine/Geräteträger zum Rahmen Steuerblock (Hydrauliksteuerblock bei hydraulischen Systemen)
- 18: Hydraulische Leitungen (bzw. Stromleitung bei Elektrozylindern)
- 19: Raupenantrieb vom Raupenfahrzeug/Geräteträger
- 20: Träger Säulenaushebung
- 21: vordere unbesetzte Öffnung der Dreipunktaufnahme

## Patentansprüche

1. Kombirahmen (16) zur Verbindung von Anbaugeräten an eine Dreipunkt-Aufhängung, **dadurch gekennzeichnet, dass** gleichzeitig mindestens zwei Anbaugeräte an den Kombirahmen (16) befestigt und betrieben werden können.

2. Kombirahmen (16) nach Anspruch 1, **dadurch gekennzeichnet, dass** der Kombirahmen (16) über einen Trägerrahmen (5) verfügt, mit welchem mindestens zwei höhenverstellbare Säulenaushebungen (1, 2) verbunden sind, wobei an den Säulenaushebungen (1, 2) die Anbaugeräte befestigt und betrieben werden können.

3. Kombirahmen (16), nach Anspruch 2, wobei die Säulenaushebungen (1, 2) bei Verbindung des Kombirahmens (16) mit der Dreipunktaufnahme einer Antriebsmaschine oder eines Geräteträgers quer zur Fahrtrichtung nebeneinander angeordnet sind.

4. Kombirahmen (16) nach Anspruch 2 oder 3, wobei die Säulenaushebungen (1, 2) unabhängig voneinander höhenverstellbar sind und/oder wobei die and den Säulenaushebungen (1, 2) befestigten Anbaugeräte unabhängig voneinander betrieben werden können.

5. Kombirahmen (16) nach einem der der Ansprüche 2 bis 4, wobei Säulenaushebungen (1, 2) über Hubzylinder (9) höhenverstellbar sind.

6. Kombirahmen (16) nach Anspruch 5, wobei die Hubzylinder doppelwirkend sind.

7. Kombirahmen (16) nach einem der Ansprüche 2 bis 6, wobei der Abstand zwischen den Säulenaushebungen (1, 2) geändert werden kann und dadurch erfolgt, dass diese unabhängig voneinander von der zum Boden während der Verwendung des Kombirahmens (16) im Wesentlichen senkrechten Mittelachse des Kombirahmens (16) entfernt oder auf diese zubewegt werden können.

8. Kombirahmen (16) nach einem der Ansprüche 2 bis 7, wobei die Säulenaushebungen (1, 2) derart mit dem Trägerrahmen (5) verbunden sind, dass sie aus einem Trägerrahmen (5) aus- und eingefahren werden können.

9. Kombirahmen (16) nach Anspruch 7 oder 8, wobei die Veränderung des Abstandes zwischen den Säulenaushebungen (1, 2) über Hubzylinder (6) erfolgt, vorzugsweise, wobei die Hubzylinder (6) doppelwirkend sind.

10. Kombirahmen (16) nach einem der Ansprüche 2 bis 9, wobei ein Anbaugerät an den Kombirahmen (16) zwischen den Säulenaushebungen (1, 2) befestigt und betrieben werden kann.

11. Kombirahmen (16) nach einem der Ansprüche 1 bis 10, wobei der Kombirahmen räder- und kettenlos ist.

12. Verwendung eines Kombirahmens (16) nach einem der vorangehenden Ansprüche im Pflanzenanbau.

13. Verwendung eines Trägersystems zum Betrieb eines Kombirahmens nach einem der Ansprüche 1 bis 11 in der Landwirtschaft, vorzugsweise wobei das Trägersystem raupengestützt ist.

14. Verfahren zur Gewinnung von Obst aus Obstpflanzen in einer Reihenkultur, umfassend:
- Anbringen von mindestens zwei Anbaugeräten an den Kombirahmen (16) nach einem der Ansprüche 1 bis 11;
- Durchziehen des Kombirahmens samt den Anbaugeräten zu einem oder mehreren Zeitpunkten während der Kultivierung von Obstpflanzen in Reihenkultur zwischen den Pflanzen der Reihenkultur, wobei die Anbaugeräte betrieben werden; und
- Ernten des bei der Kultivierung entstandenen Obstes.

15. Verfahren nach Anspruch 14, wobei das angebaute Obst Weinreben sind.
